# EUROPÄISCHE PATENTANMELDUNG

(11) **EP 1 191 460 A1**
(43) Veröffentlichungstag der Anmeldung: **27.03.2002**
(21) Anmeldenummer: 00810870.6
(22) Anmeldetag: 21.09.2000
(51) Int. Cl.: G06F 17/30, G10L 17/00

(54) **Verfahren und System für die Klassifizierung von digitalen Audio- und Videodateien**

(71) Anmelder: Swisscom AG, 3000 Bern 29 (CH)
(72) Erfinder: Ledermann, Daniel, 3128 Rümligen (CH); Herrmann, Beat, 3006 Bern (CH); Ben Yacoub, Souheil, 3014 Bern (CH); Schlauss, Denis, 3072 Ostermundigen (CH)
(74) Vertreter: BOVARD AG - Patentanwälte

(57) **Zusammenfassung**

Vorgeschlagen wird ein Verfahren und ein System für die Klassifizierung von digitalen Audio- und Videodateien (21), welche Audiodateien Tondaten umfassen und welche Videodaten Bilddaten (211) und diesen Bilddaten (211) zugeordnete Tondaten (212) umfassen. Mittels eines Spracherkennungsmoduls (3) werden jeweils für eine betreffende Audio- oder Videodatei (21) in den Tondaten (212) enthaltene Sprachdaten detektiert und daraus Textdaten generiert, wobei mindestens ein Sprecher, von welchem mindestens Teile der den Sprachdaten entsprechenden Texte gesprochen wurden, in einer Sprecherdatenbank (4) identifiziert wird. Aus dem semantischen Inhalt der Textdaten und basierend auf Themenbezeichnungen (44), die dem identifizierten Sprecher (41) zugeordnet in der Sprecherdatenbank gespeichert sind, wird ein thematischer Klassifizierungsschlüssel (22) hergeleitet und der betreffenden Audio- oder Videodatei (21) zugeordnet in einer Audio- und/oder Videodatenbank (2) abgespeichert.

## Beschreibung

Die vorliegende Erfindung betrifft ein Verfahren und ein System für die Klassifizierung von digitalen Audio- und Videodateien. Insbesondere betrifft die vorliegende Erfindung ein Verfahren und ein System für die Klassifizierung von digitalen Audiodateien, die Tondaten umfassen, und Videodateien, die jeweils Bilddaten und diesen Bilddaten zugeordnete Tondaten umfassen, gemäss dem Oberbegriff des unabhängigen Anspruchs 1, respektive des unabhängigen Anspruchs 5.

Mit der zunehmenden Verfügbarkeit von Endgeräten für die Verarbeitung von digitalen Multimediadaten, beispielsweise Multimediaobjekte mit Bild-, Video-, Text- und/oder Audiodaten (Tondaten), und der Verbreitung dieser Multimediadaten über das sich schnell ausdehnende Internet stehen immer mehr Benutzer einer riesigen Menge von Multimediadaten (Multimediainformationen) gegenüber. Die Menge von verfügbaren Multimediainformationen ist so gross, dass durch die Benutzer oft mehr Zeit für die Suche nach interessanten Informationen aufgewendet werden muss, als sie für die Verwendung der gefundenen Informationen einsetzen. Es besteht ein dringendes Bedürfnis, diese Informationen für die Benutzer so zu organisieren, dass sie durch die Benutzer schneller und gezielter gefunden und/oder bezogen werden können. Insbesondere für komplexe Multimediaobjekte Videodaten (Videoinformationen) besteht das Bedürfnis für inhaltliche Klassifizierung, um dadurch den Benutzern eine inhaltsbasierte Filterung von Videoinformationen zu ermöglichen. Da Multimediaobjekte mit Videoinformationen üblicherweise auch den Videoinformationen zugeordnete Audioinformationen enthalten, können die Audioinformationen, insbesondere Audioinformationen mit sprachlichem Inhalt, dazu verwendet werden, die dazugehörigen Videoinformationen und/oder die Audioinformationen selbst zu klassifizieren. Im folgenden werden digitale Multimediaobjekte, die Videodaten und zugeordnete Audiodaten umfassen, als Videodateien bezeichnet, die jeweils Bilddaten und diesen Bilddaten zugeordnete Tondaten umfassen, während digitale Multimediaobjekte, die nur Audiodaten, respektive Tondaten, umfassen, als Audiodateien bezeichnet werden, die Tondaten umfassen.

In der Patentschrift US 5136655 wird ein Verfahren beschrieben, in welchem, unter Verwendung eines Spracherkennungsmoduls, automatisch Wörter und zugehörige Bilder aus Videodateien mit Bild- und Tondaten extrahiert und mit einem Index versehen werden, beispielsweise ein Frame-Zähler, der das Suchen und selektive Beziehen von Wort- und Bilddaten ermöglicht. Das Verfahren gemäss US 5136655 scheint für die suchbare Indexierung einzelner Bilder innerhalb einer Videodatei geeignet zu sein, es eignet sich allerdings nicht dafür den Gesamtinhalt einer Videodatei automatisch thematisch zu klassifizieren.

In der Patentschrift US 5835667 werden ein Verfahren und eine Vorrichtung für die Erstellung von suchbaren digitalen Videotheken aus Tondaten und Bilddaten beschrieben. Gemäss der Lehre von US 5835667 werden die Tondaten und Bilddaten jeweils mit Zeitstempeln versehen und mittels eines Spracherkennungsmoduls und Sprachinterpretationsfunktionen Dialoge und Kommentare automatisch aus den Tondaten erfasst und die Bilddaten darauf basierend in verschiedene Sequenzen segmentiert und ein Index zu den Tondaten erstellt, mittels welchem nach Videobildern und -sequenzen gesucht werden kann. Auch das Verfahren gemäss US 5835667 ist vor allem auf die Indexierung einzelner Bilder und Sequenzen einer Videodatei ausgerichtet und nicht darauf, den Gesamtinhalt einer Videodatei automatisch thematisch zu klassifizieren.

Es ist eine Aufgabe dieser Erfindung, ein neues und besseres Verfahren sowie dafür geeignete Mittel vorzuschlagen, welche die Klassifizierung von digitalen Audiodateien, die Tondaten umfassen, und Videodateien, die jeweils Bilddaten und diesen Bilddaten zugeordnete Tondaten umfassen, ermöglichen, wobei die Klassifizierung einer Audio- oder Videodatei sich auf den thematischen Gesamtinhalt dieser Audio- oder Videodatei bezieht.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass für die Klassifizierung von digitalen Audio- und Videodateien, bei der jeweils mittels eines Spracherkennungsmoduls in den Tondaten einer Audio- oder Videodatei enthaltene Sprachdaten detektiert und aus den detektierten Sprachdaten Textdaten generiert werden, mindestens ein Sprecher, von welchem mindestens Teile der den Sprachdaten der Audio- oder Videodatei entsprechenden Texte gesprochen wurden, in einer Sprecherdatenbank identifiziert wird, dass dem identifizierten Sprecher zugeordnete Themenbezeichnungen aus der Sprecherdatenbank entnommen werden, und dass der Klassifizierungsschlüssel für die Audio- oder Videodatei basierend auf den entnommenen Themenbezeichnungen und dem semantischen Inhalt der Textdaten hergeleitet wird. Gemäss der vorliegenden Erfindung wird für die Klassifizierung von Audio- oder Videodateien zusätzlich zum semantischen Inhalt von gesprochenem Text in den Tondaten auch mitberücksichtigt, von wem der Text gesprochen wird und zu welchen Themen der Sprecher des Texts üblicherweise spricht. Durch die Mitberücksichtigung der Identität von Sprechern bei der Klassifizierung von Audio- oder Videodateien kann die Qualität der Klassifizierung, das heisst die Genauigkeit des thematischen Klassifizierungsschlüssels, respektive der Grad der Korrelation des Klassifizierungsschlüssels mit dem Inhalt der Audio- oder Videodatei, erhöht werden.

In einer bevorzugten Ausführungsvariante sind den Themenbezeichnungen, die in der Sprecherdatenbank einem Sprecher zugeordnet sind, jeweils Wahrscheinlichkeitsangaben zugeordnet, die angeben, mit welcher Wahrscheinlichkeit ein Sprecher Texte zum Thema spricht, das mit der betreffenden Themenbezeichnung bezeichnet ist, und der Klassifizierungsschlüssel für die betreffende Audio- oder Videodatei wird unter Berücksichtigung dieser Wahrscheinlichkeitsangaben hergeleitet. Die Quantifizierung der Wahrscheinlichkeit, dass ein Sprecher Texte zu einem konkreten Thema spricht, hat insbesondere den Vorteil, dass durch die Identifizierung des Sprechers eine Wahrscheinlichkeitsschätzung des Themas und somit des Klassifizierungsschlüssels der betreffenden Audio- oder Videodatei gemacht werden kann.

In einer bevorzugten Ausführungsvariante werden bei der Herleitung des Klassifizierungsschlüssels für die betreffende Audio- oder Videodatei Klassifizierungsparameter verwendet, die anlässlich vorgängig durchgeführter Lernphasen zur Herleitung von Klassifizierungsschlüsseln (aus dem semantischen Inhalt von Textdaten) generiert wurden. Die Klassifizierungsparameter umfassen beispielsweise Parameter für statistische Algorithmen, neuronale Netzwerke oder Expertensysteme, welche im Klassifizierungsmodul für die Herleitung von Klassifizierungsschlüsseln aus dem semantischen Inhalt von Textdaten verwendet werden können. Die Wiederverwendung von Klassifizierungsparameter aus vorgängigen Lernphasen hat insbesondere den Vorteil, dass die Herleitung von Klassifizierungsschlüsseln aus dem semantischen Inhalt von Textdaten effizienter und zutreffender ausgeführt werden kann. Zudem kann die Herleitung von Klassifizierungsschlüsseln aus dem semantischen Inhalt von Textdaten durch Verwendung von neuen Klassifizierungsparametern laufend an neue Gegebenheiten, beispielsweise neue Wortbildungen, Redewendungen, Ausdrücke oder Themen, angepasst werden.

In alternativen oder sich ergänzenden Ausführungsvarianten wird der Sprecher basierend auf Stimmparametern oder im Falle von Videodateien basierend auf visuellen Gesichtsparametern identifiziert, die jeweils einem Sprecher zugeordnet in der Sprecherdatenbank abgespeichert sind. Da typischerweise für die Spracherkennung Stimmparameter ebenfalls abgespeichert werden müssen, kann die Identifizierung des Sprechers mittels Bildverarbeitung aus Bilddaten basierend auf abgespeicherten Gesichtsparametern beispielsweise bloss in Zweifelsfällen oder bei ungenügend verlässlicher Stimmerkennung ergänzend angewendet werden, so dass im Falle von Videodateien insgesamt eine zuverlässigere Sprecheridentifizierung erreicht werden kann.

Nachfolgend wird eine Ausführung der vorliegenden Erfindung anhand eines Beispieles beschrieben. Das Beispiel der Ausführung wird durch folgende einzige beigelegte Figur illustriert:

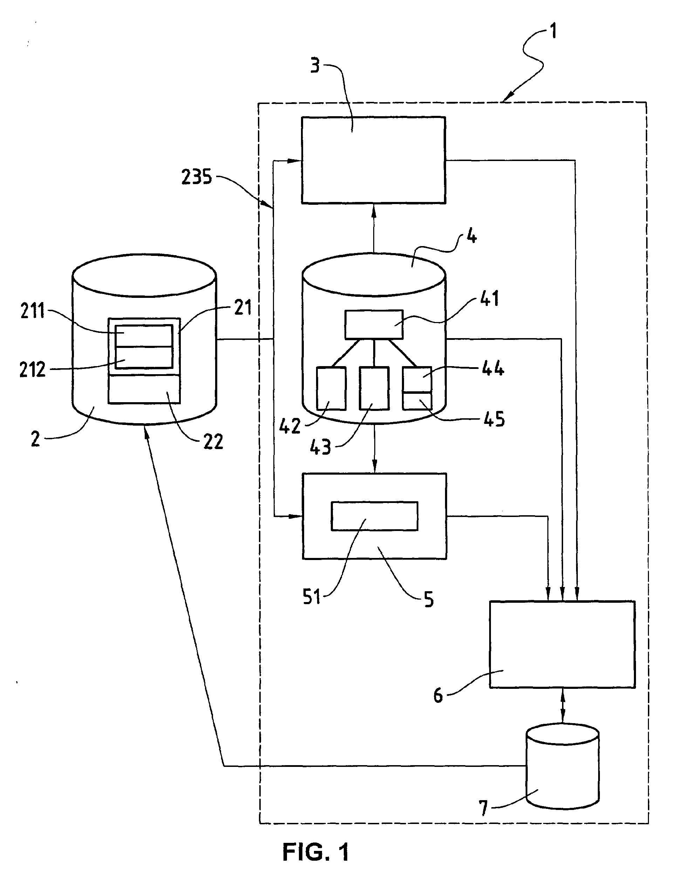

Figur 1 zeigt ein Blockdiagramm, welches schematisch eine Audio- und/oder Videodatenbank und ein damit verbundenes computerbasiertes System für die Klassifizierung von digitalen Audio- und Videodateien illustriert.

In der Figur 1 bezieht sich die Bezugsziffer 1 auf ein computerbasiertes System für die Klassifizierung von digitalen Audio- und Videodateien 21, die beispielsweise in einer Audio- und/oder Videodatenbank 2 gespeichert sind. Die Audio- und/oder Videodatenbank 2 enthält typischerweise eine Vielzahl von Audio- und/oder Videodateien 21 und ist für Benutzer, die mit fixen oder mobilen Kommunikationsendgeräten ausgerüstet sind, über ein nicht dargestelltes Telekommunikationsnetz, beispielsweise das Internet, zugänglich, Eine Audiodatei 21 umfasst jeweils Tondaten 212 und kann als Tonsequenz wiedergegeben werden, während eine Videodatei 21 jeweils Bilddaten 211 und Tondaten 212 umfasst und als vertonte Videosequenz wiedergegeben werden kann. Die Spieldauer der Videosequenzen beträgt beispielsweise eine halbe Minute oder einige Minuten; sie kann aber auch beträchtlich länger sein. Die Audio- oder Videodateien 21 sind beispielsweise Multimediobjekte gemäss einer MPEG-Norm (Moving Picture Expert Group), beispielsweise MPEG4 oder MPEG7, oder gemäss einem anderen digitalen Audio- oder Video- oder Multimediaformat.

Wie in der Figur 1 dargestellt ist, ist jeweils einer Audio- oder Videodatei 21 ein Klassifizierungsschlüssel 22 zugeordnet, der es den Benutzern ermöglicht, selektiv auf diejenigen Audio- oder Videodateien 21 zuzugreifen, die einen gewünschten Klassifizierungsschlüssel 22 aufweisen. Es ist auch möglich, dass einer Audio- oder Videodatei 21 mehrere unterschiedliche Klassifizierungsschlüssel 22 zugeordnet sind, denen beispielsweise jeweils ein Relevanzfaktor zugeordnet ist. Ein Klassifizierungsschlüssel 22 entspricht beispielsweise einem Thema oder einem Sachgebiet wie beispielsweise Sport, Kunst, Finanz und Wirtschaft, Technik oder Reisen. Der Klassifizierungsschlüssel 22 einer Audio- oder Videodatei 21 repräsentiert also eine thematische Kategorie der Audio- oder Videodatei 21. Mehrere Klassifizierungsschlüssel 22 sind beispielsweise dann sinnvoll, wenn eine Audio- oder Videodatei 21 mehrere Themen betrifft, wobei der Relevanzfaktor entsprechend angibt, welche Bedeutung einem Klassifizierungsschlüssel 22 zukommt, beispielsweise als zeitlicher Anteil an der Audio- oder Videosequenz. Ein Klassifizierungsschlüssel 22 kann auch hierarchisch aufgebaut sein, so dass beispielsweise einer Audio- oder Videodatei 21 über Aspekte der Computerprogrammierung der Klassifizierungsschlüssel 22 "Technik.Computer.Programmierung" zugeordnet wird. Die möglichen Klassifizierungsschlüssel 22 können beispielsweise auf einen Satz von vordefinierten zulässigen Klassifizierungsschlüsseln 22 begrenzt sein, der beispielsweise in der Audio- und/oder Videodatenbank 2 und/oder in einer Datei/Datenbank des Systems 1 gespeichert ist. Die Klassifizierungsschlüssel 22 werden automatisch durch das computerbasierte System 1 für die Klassifizierung von digitalen Audio- und Videodateien 21 generiert, wie im folgenden beschrieben wird.

Wie in der Figur 1 schematisch dargestellt wird, umfasst das System 1 ein Spracherkennungsmodul 3, eine Sprecherdatenbank 4, ein Sprecheridentifizierungsmodul 5, ein Klassifizierungsmodul 6 sowie Klassifizierungsparameter 7, die in einer Datenbank oder in einer Datei gespeichert sind, die für das Klassifizierungsmodul 6 zugänglich ist. Das System 1 ist vorzugsweise mittels programmierten Softwaremodulen auf einem herkömmlichen Computer ausgeführt. Es ist auch möglich, Teile des Systems 1 mittels speziellen Hardwaremodulen auszuführen, beispielsweise kann das Spracherkennungsmodul 3, das Klassifizierungsmodul 6 und/oder das Sprecheridentifizierungsmodul 5 ein neuronales Netzwerk umfassen, das hardwaremässig realisiert ist.

Wie in der Figur 1 durch die Pfeile 235 angedeutet wird, werden im Spracherkennungsmodul 3 und im Sprecheridentifizierungsmodul 5 Audio- oder Videodateien 21 aus der Audio- und/oder Videodatenbank 2 verarbeitet. Die Audio- und/oder Videodatenbank 2 und das System 1 können beispielsweise auf demselben Computer oder auf verschiedenen Computern ausgeführt werden, die über Kommunikationsnetze miteinander verbunden sind. Der Fachmann wird verstehen, dass sowohl das Spracherkennungsmodul 3 als auch das Sprecheridentifizierungsmodul 5 Audio- oder Videodateien 21 aus der Audio- und/oder Videodatenbank 2 beziehen kann und/oder dass ein Datenaustausch zwischen dem Spracherkennungsmodul 3 und dem Sprecheridentifizierungsmodul 5 erfolgen kann. Entsprechend dem betreffenden Format der Videodatei 21 werden zunächst die Bilddaten 211 und die zugehörigen Tondaten 212 der Videodatei 2 in einem Decodierungsschritt separiert, der im Spracherkennungsmodul 3, im Sprecheridentifizierungsmodul 5 oder in einem anderen Modul durchgeführt werden kann. Im nächsten Schritt werden durch das Spracherkennungsmodul 3 in den Tondaten 212 der Audio- oder Videodatei 2 enthaltene Sprachdaten detektiert.

In einem weiteren Schritt wird durch das Sprecheridentifizierungsmodul 5 basierend auf den detektierten Sprachdaten und auf Informationen aus der Sprecherdatenbank 4 der Sprecher 41 identifiziert, von welchem mindestens Teile der den Sprachdaten der betreffenden Audio- oder Videodatei 2 entsprechenden Texte gesprochen wurden. Es ist möglich, dass das Sprecheridentifizierungsmodul 5 mehrere Sprecher 41 identifiziert, die jeweils verschiedenen Segmenten der Sprachdaten zugeordnet werden. Das Sprecheridentifizierungsmodul 5 identifiziert einen Sprecher 41 anhand von Stimmparametern 42, die in der Sprecherdatenbank 4 jeweils eindeutig einem Sprecher 41 zugeordnet gespeichert sind. Als Alternative oder in Zweifelsfällen, beispielsweise bei ungenügend verlässlicher Stimmerkennung, kann das Sprecheridentifizierungsmodul 5 mit einem Gesichtsidentifizierungsmodul 51 ausgestattet sein, welches Gesichtsidentifizierungsmodul 51 im Falle von Videodateien den Sprecher 41 mittels Bildverarbeitungsmitteln und unter Verwendung von visuellen Gesichtsparametern 43, die in der Sprecherdatenbank 4 jeweils eindeutig einem Sprecher 41 zugeordnet gespeichert sind, basierend auf den Bilddaten 212 identifiziert.

In einem weiteren Schritt werden durch das Spracherkennungsmodul 3 aus den detektierten Sprachdaten Textdaten generiert, wobei beispielsweise die Stimmparameter 42 des Sprechers, der den betreffenden Sprachdaten zugeordnet wurde, aus der Sprecherdatenbank 4 verwendet werden.

In einem nachfolgenden Schritt wird durch das Klassifizierungsmodul 6, basierend auf den im Spracherkennungsmodul 3 bestimmten Textdaten und unter Berücksichtigung des im Sprecheridentifizierungsmodul 5 identifizierten Sprechers 41, ein Klassifizierungsschlüssel 22 für die betreffende Audio- oder Videodatei 21 hergeleitet und der betreffenden Audio- oder Videodatei 21 zugeordnet in der Audio- und/oder Videodatenbank 2 abgespeichert. Das Klassifizierungsmodul 6 verwendet zur Herleitung des Klassifizierungsschlüssels 22 die dem identifizierten Sprecher 41 zugeordneten Themenbezeichnungen 44, die angeben, zu welchen Themen der betreffende Sprecher 41 erfahrungsgemäss spricht. Zur Abschätzung der Wahrscheinlichkeit, dass der betreffende Sprecher 41 zu einem durch eine Themenbezeichnung 44 bezeichneten Thema spricht, kann das Klassifizierungsmodul 6 zudem Wahrscheinlichkeitsangaben 45 verwenden, die jeweils einer Themenbezeichnung 44 zugeordnet in der Sprecherdatenbank 4 gespeichert sind. Mögliche Werte von Themenbezeichnungen entsprechen beispielsweise den möglichen Werten von Klassifizierungsschlüsseln 22 und sind beispielsweise auf den oben beschriebenen Satz von vordefinierten zulässigen Klassifizierungsschlüsseln 22 begrenzt. Das Klassifizierungsmodul 6 analysiert die Textdaten hinsichtlich deren semantischen Inhalts. Für die Bestimmung des semantischen Inhalts der Textdaten und die Herleitung des Klassifizierungsschlüssels 22 umfasst das Klassifizierungsmodul 6 vorzugsweise ein Statistikmodul mit einem statistischen Klassifizierungsalgorithmus, beispielsweise einen sogenannten "Bayesian Classifier", oder zum Beispiel ein regelbasiertes Expertensystem oder ein neuronales Netzwerk. Für die Bestimmung des semantischen Inhalts der Textdaten können auch Sprachinterpretationsfunktionen gemäss der bereits oben zitierten Patentschrift US 5835667 verwendet werden. Das Klassifizierungsmodul 6 wird vorzugsweise während einer Lernphase auf der Basis von Textdaten "trainiert", wobei Klassifizierungsparameter 7 des Klassifizierungsmoduls beispielsweise auf Grund einer menschlichen Beurteilung von Klassifizierungsschlüsseln angepasst werden, die durch das Klassifizierungsmodul 6 für die Lerntexte vorgeschlagen werden. Die Klassifizierungsparameter 7 umfassen beispielsweise Parameter für statistische Algorithmen, Regeln für Expertensysteme oder Gewichtungsfaktoren für neuronale Netzwerke. Das Klassifizierungsmodul 6 generiert also aus den eingegebenen Textdaten und den mit Wahrscheinlichkeitsangaben versehenen Themenbezeichnungen unter Verwendung der Klassifizierungsparameter 7 einen (oder mehrere) Klassifizierungsschlüssel 22 (beispielsweise jeweils mit einem oben beschriebenen Relevanzfaktor versehen) für eine betreffende Audio- oder Videodatei 21. Falls kein Sprecher identifiziert werden kann, wird der Klassifizierungsschlüssel 22 auf Grund der Analyse des semantischen Inhalts der Textdaten hergeleitet.

Zusätzlich zum Klassifizierungsschlüssel 22 können auch die bestimmten Textdaten einer Audio- oder Videodatei 21 zugeordnet in der Audio- und/oder Videodatenbank 2 abgespeichert werden.

Das erfindungsgemässe System 1 eignet sich für die automatische Klassifizierung von digitalen Audio- und Videodateien 21 und kann in verschiedensten Umgebungen mit unterschiedlichen Themen der Audio- oder Videodateien 21 eingesetzt werden. Zum Beispiel eignet sich das vorgeschlagene System für die automatische Klassifizierung von Audio- oder Videodateien 21 mit Ton- oder (vertonten) Videosequenzen von Sportereignissen, welche Audio- oder Videodateien in einer Audio- und/oder Videodatenbank 2 gespeichert sind, die über ein Internet-Portal zugänglich sind. Für diese Anwendung würde die Sprecherdatenbank 4 beispielsweise Sportreporter, Sportredaktoren sowie Sportler und Sportfunktionäre als Sprecher umfassen und die Themenbezeichnungen, respektive die Klassifizierungsschlüssel, würden beispielsweise verschiedene Sportarten und Namen von wichtigen Sportlern und Sportereignissen umfassen, so dass Benutzer dementsprechend gezielt und selektiv Audio- und/oder Videodateien 21 beziehen können. In einem anderen Beispiel können Radio- und/oder Fernsehnachrichten in Audio- beziehungsweise Videodateien 21 mit thematisch unterschiedlichen Nachrichtensegmenten aufgeteilt werden, beispielsweise in internationale Ereignisse, Finanz und Wirtschaft, Politik, Sport, Kunst, Wissenschaft und Technologie oder Wettervorhersage, und in einer Audio- und/oder Videodatenbank 2 gespeichert und mittels eines Audio- oder Videoservers Benutzern über Telekommunikationsnetze verfügbar gemacht werden. Auch das Radio- und/oder Fernsehprogramm kann in verschiedene Audio- beziehungsweise Videodateien 21 segmentiert und automatisch klassifiziert den Benutzern zum selektiven Bezug über Telekommunikationsnetze verfügbar gemacht werden. Benutzer können in der Audio- und/oder Videodatenbank 2 beispielsweise nach Audio- und/oder Videodateien 21 mit einem (oder mehreren) gewünschten Klassifizierungsschlüssel 22 suchen oder gefiltert übermitteln lassen.

Das vorgeschlagene System 1 für die automatische thematische Klassifizierung von digitalen Audio- und Videodateien 21 hat gegenüber der manuellen thematischen Klassifizierung von Ton- oder Videosequenzen durch eine Fachperson den Vorteil, dass es nicht durch subjektive Einflüsse der betreffenden Fachperson verfälscht und dass es eine viel grössere Anzahl von Audio- oder Videodateien in einer wesentlich kürzeren Zeit automatisch klassifizieren kann, was insbesondere in Anwendungen mit ständig neuem Audio- oder Videomaterial, das beispielsweise stündlich oder täglich der Audio- und/oder Videodatenbank 2 hinzugefügt wird, ein grosser Vorteil ist.

### Liste der Bezugszeichen

- 1: Computerbasiertes System
- 2: Audio- und/oder Videodatenbank
- 3: Spracherkennungsmodul
- 4: Sprecherdatenbank
- 5: Sprecheridentifizierungsmodul
- 6: Klassifizierungsmodul
- 7: Klassifizierungsparameter
- 21: Audio- oder Videodatei
- 22: Klassifizierungsschlüssel
- 41: Sprecher
- 42: Stimmparameter
- 43: visuelle Gesichtsparameter
- 44: Themenbezeichnung
- 45: Wahrscheinlichkeitsangabe
- 211: Bilddaten
- 212: Tondaten
- 235: Pfeile (Datenfluss)

## Patentansprüche

1. Verfahren für die Klassifizierung von digitalen Audio- und Videodateien (21), welche Audiodateien Tondaten umfassen und welche Videodateien Bilddaten (211) und diesen Bilddaten (211) zugeordnete Tondaten (212) umfassen, in welchem Verfahren jeweils für eine betreffende Audio- oder Videodatei (21) mittels eines Spracherkennungsmoduls (3) in den Tondaten (212) der betreffenden Audio- oder Videodatei (21) enthaltene Sprachdaten detektiert und aus den detektierten Sprachdaten Textdaten generiert werden, aus welchen Textdaten ein Klassifizierungsschlüssel (22) für die betreffende Audio- oder Videodatei (21) hergeleitet und der betreffenden Audio- oder Videodatei (21) zugeordnet abgespeichert wird, **dadurch gekennzeichnet,**
**dass** mindestens ein Sprecher, von welchem mindestens Teile der den Sprachdaten der betreffenden Audio- oder Videodatei (21) entsprechenden Texte gesprochen wurden, in einer Sprecherdatenbank (4) identifiziert wird,
**dass** dem identifizierten Sprecher (41) zugeordnete Themenbezeichnungen (44) aus der Sprecherdatenbank (4) entnommen werden, und
**dass** der Klassifizierungsschlüssel (22) für die betreffende Audio- oder Videodatei (21) basierend auf den entnommenen Themenbezeichnungen (44) und dem semantischen Inhalt der Textdaten hergeleitet wird.

2. Verfahren gemäss Anspruch 1, **dadurch gekennzeichnet, dass** den Themenbezeichnungen (44), die in der Sprecherdatenbank (4) einem Sprecher (41) zugeordnet sind, jeweils Wahrscheinlichkeitsangaben (45) zugeordnet sind, die angeben mit welcher Wahrscheinlichkeit ein betreffender Sprecher Texte zum Thema spricht, das mit der betreffenden Themenbezeichnung (44) bezeichnet ist, und dass der Klassifizierungsschlüssel (22) für die betreffende Audio- oder Videodatei (21) unter Berücksichtigung dieser Wahrscheinlichkeitsangaben (45) hergeleitet wird.

3. Verfahren gemäss einem der Ansprüche 1 oder 2, **dadurch gekennzeichnet, dass** bei der Herleitung des Klassifizierungsschlüssels (22) für die betreffende Audio- oder Videodatei (21) Klassifizierungsparameter (7) verwendet werden, die anlässlich vorgängig durchgeführter Lernphasen der Herleitung von Klassifizierungsschlüsseln (22) generiert wurden.

4. Verfahren gemäss einem der Ansprüche 1 bis 3, **dadurch gekennzeichnet, dass** der Sprecher basierend auf Stimmparametern (42) identifiziert wird, die jeweils einem Sprecher (41) zugeordnet in der Sprecherdatenbank (4) abgespeichert sind.

5. Verfahren gemäss einem der Ansprüche 1 bis 4, **dadurch gekennzeichnet, dass** im Falle von Videodateien der Sprecher basierend auf visuellen Gesichtsparametern (43) identifiziert wird, die jeweils einem Sprecher (41) zugeordnet in der Sprecherdatenbank (4) abgespeichert sind.

6. Computerbasiertes System (1) für die Klassifizierung von digitalen Audio- und Videodateien (21), welche Audiodateien Tondaten umfassen und welche Videodateien Bilddaten (211) und diesen Bilddaten (211) zugeordnete Tondaten (212) umfassen, welches System (1) ein Spracherkennungsmodul (3) umfasst, das jeweils für eine betreffende Audio- oder Videodatei (21) in den Tondaten (212) der betreffenden Audio- oder Videodatei (21) enthaltene Sprachdaten detektiert und aus den detektierten Sprachdaten Textdaten generiert, und welches System (1) ein Klassifizierungsmodul (6) umfasst, das aus den Textdaten einen Klassifizierungsschlüssel (22) für die betreffende Audio- oder Videodatei (21) herleitet und den hergeleiteten Klassifizierungsschlüssel (22) der betreffenden Audio- oder Videodatei (21) zugeordnet abspeichert, **dadurch gekennzeichnet,**
**dass** das System (1) eine Sprecherdatenbank (4) sowie ein Sprecheridentifizierungsmodul (5) umfasst, welches Sprecheridentifizierungsmodul (5) mindestens einen Sprecher (41) in der Sprecherdatenbank (4) identifiziert, von welchem mindestens Teile der den Sprachdaten der betreffenden Audio- oder Videodatei (21) entsprechenden Texte gesprochen wurden, und
**dass** das Klassifizierungsmodul (6) so eingerichtet ist, dass es den Klassifizierungsschlüssel (22) für die betreffende Audio- oder Videodatei (21) basierend auf Themenbezeichnungen (44), die dem identifizierten Sprecher (41) zugeordnet in der Sprecherdatenbank (4) gespeichert sind, und dem semantischen Inhalt der Textdaten herleitet.

7. System (1) gemäss Anspruch 6, **dadurch gekennzeichnet, dass** den Themenbezeichnungen (44), die in der Sprecherdatenbank (4) einem Sprecher (41) zugeordnet sind, jeweils Wahrscheinlichkeitsangaben (45) zugeordnet sind, die angeben, mit welcher Wahrscheinlichkeit ein betreffender Sprecher Texte zum Thema spricht, das mit der betreffenden Themenbezeichnung (44) bezeichnet ist, und dass das Klassifizierungsmodul (6) so eingerichtet ist, dass es den Klassifizierungsschlüssel (22) für die betreffende Audio- oder Videodatei (21) unter Berücksichtigung dieser Wahrscheinlichkeitsangaben (45) herleitet.

8. System (1) gemäss einem der Ansprüche 6 oder 7, **dadurch gekennzeichnet, dass** es gespeicherte Klassifizierungsparameter (7) umfasst, die anlässlich vorgängig durchgeführter Lernphasen zur Herleitung von Klassifizierungsschlüsseln (22) generiert wurden, und dass das Klassifizierungsmodul (6) so eingerichtet ist, dass es bei der Herleitung des Klassifizierungsschlüssels (22) für die betreffende Audio- oder Videodatei (21) die Klassifizierungsparameter (7) verwendet.

9. System (1) gemäss einem der Ansprüche 6 bis 8, **dadurch gekennzeichnet, dass** in der Sprecherdatenbank (4) jeweils den Sprechern (41) zugeordnete Stimmparameter (42) abgespeichert sind, und dass das Sprecheridentifizierungsmodul (5) so eingerichtet ist, dass es Sprecher basierend auf diesen Stimmparametern (42) identifiziert.

10. System (1) gemäss einem der Ansprüche 6 bis 9, **dadurch gekennzeichnet, dass** in der Sprecherdatenbank (4) jeweils den Sprechern (41) zugeordnete visuelle Gesichtsparameter (43) abgespeichert sind, und dass das System ein Gesichtsidentifizierungsmodul (51) umfasst, welches so eingerichtet ist, dass es im Falle von Videodateien Sprecher basierend auf diesen Gesichtsparametern (43) identifiziert.
